# EUROPEAN PATENT APPLICATION

(11) **EP 4 535 136 A1**
(43) Date of publication of application: **09.04.2025**
(21) Application number: 23811779.0
(22) Date of filing: 22.05.2023
(51) Int. Cl.: G06F 3/0354

(54) **INPUT DEVICE, AND ELECTRONIC APPLIANCE SET**

(30) Priority: 26.05.2022 WO PCT/JP2022/021640
(71) Applicant: Nintendo Co., Ltd., Kyoto-shi, Kyoto 601-8501 (JP)
(72) Inventor: ABE, Takehiro, Kyoto-shi, Kyoto 601-8501 (JP)
(74) Representative: Bardehle Pagenberg Partnerschaft mbB Patentanwälte Rechtsanwälte
(86) International application number: PCT/JP2023/018970
(87) International publication number: WO 2023/228907

(57) **Abstract**

An input device 20 can be mounted on an electronic appliance 10 having a touch screen 12 comprising a display unit 13 and an electrostatic capacitance type touch panel 14 disposed on the display unit. The input device includes a plurality of operating units 31 that can be operated by a user, and a plurality of electrodes 43 disposed in different regions on the touch panel. Each electrode is connected to a corresponding operating unit such that an electric potential thereof changes in accordance with an operational state of the operating unit corresponding to the electrode. Further, the electrodes are arranged on the touch panel such that, with the input device mounted on the electronic appliance, the touch panel detects a change in an electrostatic capacitance between each electrode and the corresponding region on the touch panel, where said change arises due to the change in the potential of the electrode. The plurality of operating units are arranged so as to surround at last three sides of the electronic appliance when viewed in a direction perpendicular to a display surface of the touch screen, with the input device mounted on the electronic appliance.

## Description

### FIELD

The present disclosure relates to an input device and electronic apparatus set.

### BACKGROUND

It has been known in the past that input to an electrostatic capacity type touch panel is performed by a controller or buttons provided outside of the touch panel (for example, PTL 1). In particular, in the device described in PTL 1, if physical input to a cross button or push button is performed, the electrostatic capacity on the touch panel will change at the position where a pad connected with the cross button or push button is provided, and thereby input to the touch panel will be performed. As a result, it becomes possible to perform input to an electronic apparatus having a touch panel in the same way as a conventional controller provided with a cross button or push button.

### [CITATIONS LIST]

### [PATENT LITERATURE]

[PTL 1] WO2012/139203

### SUMMARY

### [TECHNICAL PROBLEM]

However, the device described in PTL 1 is one which allows to perform input to an electronic apparatus having a touch panel not provided with a cross button, push button or the like in the same way as a conventional controller and does not provide any new user experience.

In consideration of the above problem, an object of the present disclosure is to enable provision of a new user experience when performing input to an electronic apparatus having a touch panel.

### [SOLUTION TO PROBLEM]

The gist of the present disclosure is as follows.
(1) An input device able to be attached to an electronic apparatus having a touch screen provided with a display part and an electrostatic capacity type of touch panel arranged on the display part, having:
   a plurality of operating parts able to be operated by a user; and
   a plurality of electrodes arranged at different regions on the touch panel, wherein
   each of the plurality of electrodes is connected to a corresponding operating part so that its potential changes in accordance with an operating state of the operating part corresponding to the electrode and is arranged on the touch panel so that in a state where the input device is attached to the electronic apparatus, a change in an electrostatic capacity occurring due to a change in the potential of the electrode between a corresponding region on the touch panel and the electrode is detected by the touch panel, and
   the plurality of operating parts are arranged so as to surround at least three sides of the electronic apparatus when viewed in a direction perpendicular to a display screen of the touch screen in the state where the input device is attached to the electronic apparatus.
(2) The input device according to above (1), further having a fastening part for fastening the input device to the electronic apparatus in a detachable manner, wherein
   the fastening part is arranged so that at least its three sides are surrounded by the operating parts when viewed in the direction perpendicular to the display screen of the touch screen in the state where the input device is attached to the electronic apparatus.
(3) The input device according to above (2), wherein the plurality of electrodes are arranged at the fastening part.
(4) The input device according to above (2) or (3), further having a board on one surface of which the electronic apparatus is placed, wherein
   the fastening part is attached to the board in a detachable manner.
(5) The input device according to any one of above (1) to (4), further having a nontransparent cover part for covering the display screen of the touch screen where the plurality of electrodes are arranged.
(6) The input device according to any one of above (1) to (5), wherein
   the display screen of the touch screen is a rectangular shape having long sides and short sides, and
   the plurality of electrodes are arranged on the touch panel aligned along the short sides of the display screen.
(7) The input device according to any one of above (1) to (6), wherein
   the display screen of the touch screen is a square shape, and
   the operating parts have:
      a first set of operating parts arranged so as to straddle a first side of the display screen and a second side facing the first side when viewed in the direction perpendicular to the display screen of the touch screen in the state where the input device is attached to the electronic apparatus; and
      a second set of operating parts arranged so as to straddle a third side of the display screen different from the first side and the second side and a fourth side facing the third side.
(8) The input device according to any one of above (1) to (7), wherein
   the display screen of the touch screen is a rectangular shape having long sides and short sides,
   when the display screen is used as a reference, the numbers of operating parts arranged at the outsides of the long sides are the same, and
   when the display screen is used as the reference, the numbers of operating parts arranged at the outsides of the short sides are the same.
(9) The input device according to any one of above (1) to (8), further having a board on one surface of which the electronic apparatus is placed, wherein
   the plurality of operating parts are provided on the surface of the board on which the electronic apparatus is placed.
(10) The input device according to above (9), wherein the board is foldable.
(11) The input device according to above (9) or (10), further having a board on one surface of which the electronic apparatus is placed, wherein
   the board is provided with a metal sheet able to connect with the plurality of electrodes in accordance with operation of the user on the operating parts, and
   the metal sheet is provided at a position superposed with the electronic apparatus when viewed in a direction perpendicular to the one surface in the state where the input device is attached to the electronic apparatus.
(12) An electronic apparatus set having an electronic apparatus having a touch screen provided with a display part and an electrostatic capacity type of touch panel arranged on the display part, and an input device able to be attached to the electronic apparatus, wherein
   the input device has a plurality of operating parts able to be operated by a user and a plurality of electrodes arranged at different regions on the touch panel,
   each of the plurality of electrodes is connected to a corresponding operating part so that its potential changes in accordance with an operating state of the operating part corresponding to the electrode and is arranged on the touch panel so that in a state where the input device is attached to the electronic apparatus, a change in an electrostatic capacity occurring due to a change in the potential of the electrode between a corresponding region on the touch panel and the electrode is detected by the touch panel, and
   the plurality of operating parts are arranged so as to surround at least three sides of the electronic apparatus when viewed in a direction perpendicular to a display screen of the touch screen in the state where the input device is attached to the electronic apparatus.
(13) The electronic apparatus set according to above (12), further having an operating device able to communicate with the electronic apparatus at least wirelessly, wherein
   the operating device is able to communicate with the electronic apparatus wirelessly even when the input device is attached to the electronic apparatus.
(14) The electronic apparatus set according to above (13), wherein
   the operating device is formed so as to be able to be attached to the electronic apparatus, and
   the input device is attached to an attachment position of the operating device when the operating device is detached from the electronic apparatus.
(15) The electronic apparatus set according to above (13) or (14), wherein when the operating device is detached from the electronic apparatus and the input device is attached to the electronic apparatus, the operating parts and the operating device can input operations to the electronic apparatus in parallel or simultaneously for running processing in the same application program.

According to the present disclosure, a new user experience can be provided when performing input to an electronic apparatus having a touch panel.

### BRIEF DESCRIPTION OF DRAWINGS

FIG. 1 is a plan view schematically showing an electronic apparatus set according to a first embodiment.
FIG. 2 is a schematic disassembled perspective view of the electronic apparatus set.
FIG. 3 is a block diagram showing the configuration of an electronic apparatus.
FIG. 4 shows one example of sections on a surface of a touch panel divided into a matrix.
FIG. 5 is a plan view showing a board of an input device.
FIG. 6 is a perspective view of a socket and electronic apparatus in the state with the socket attached to the electronic apparatus.
FIG. 7A is a view schematically showing an electronic apparatus and operating devices.
FIG. 7B is a view schematically showing an electronic apparatus, input device, and operating devices.
FIG. 8 is a plan view schematically showing an electronic apparatus set according to a second embodiment.
FIG. 9 is a schematic partial cross-sectional side view of a part of the electronic apparatus set seen along a line IX-IX of FIG. 8.
FIG. 10 is a disassembled side view of an input device.
FIG. 11 is a plan view of an input device.

### DESCRIPTION OF EMBODIMENTS

Below, referring to the drawings, embodiments will be explained in detail. Note that in the following explanation, similar component elements will be assigned the same reference notations.

### First Embodiment

### <Electronic Apparatus Set>

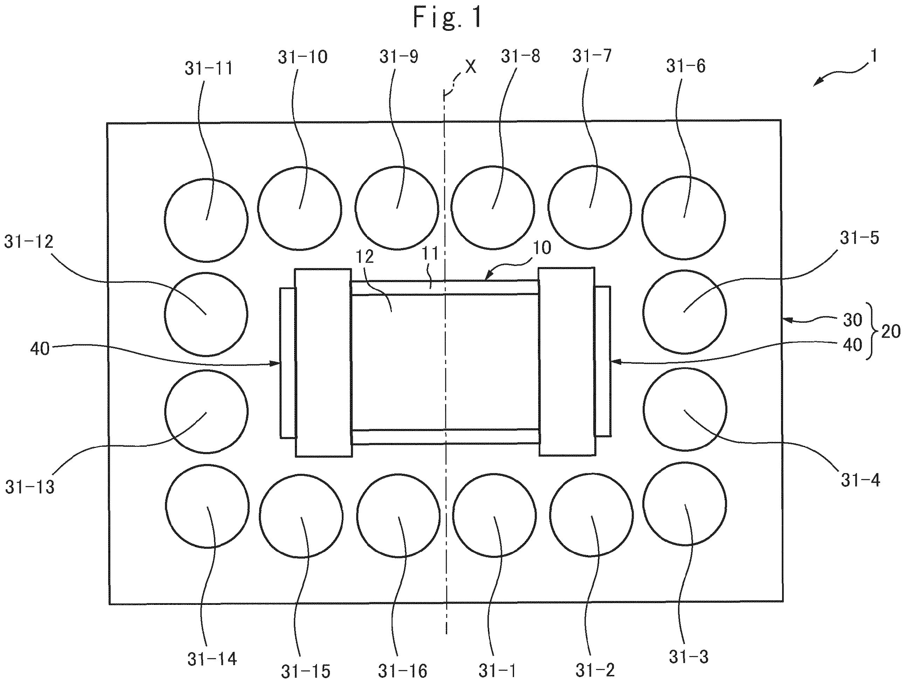

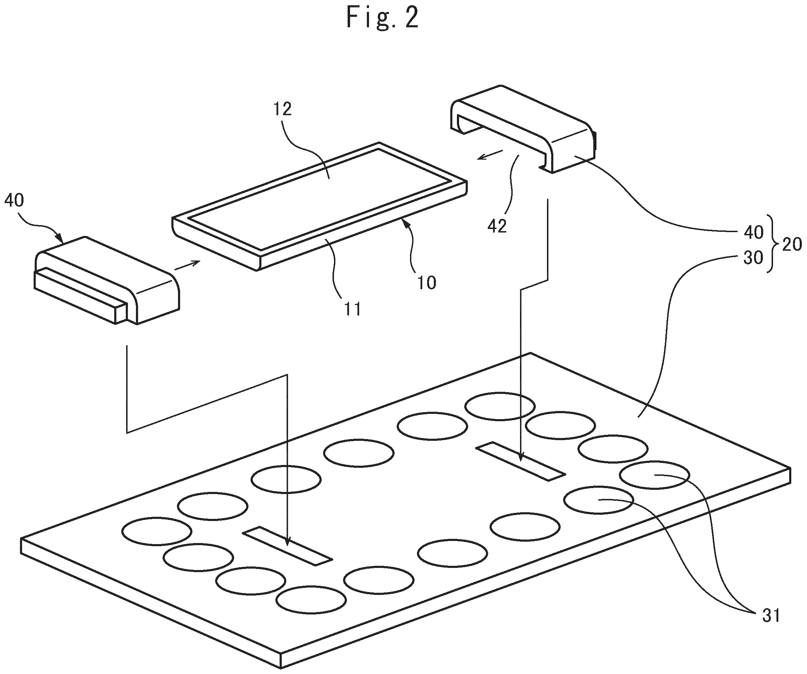

Referring to FIGS. 1 and 2, an electronic apparatus set 1 according to a first embodiment will be explained. FIG. 1 is a plan view schematically showing an electronic apparatus set 1 according to the first embodiment. FIG. 2 is a schematic disassembled perspective view of the electronic apparatus set 1.

As will be understood from FIGS. 1 and 2, the electronic apparatus set 1 has an electronic apparatus 10 having a touch screen 12, and an input device 20 able to be attached to the electronic apparatus 10. The input device 20 is used for input to the electronic apparatus 10 through the touch screen 12 of the electronic apparatus 10.

### <Electronic Apparatus>

Next, referring to FIGS. 1 to 4, the electronic apparatus 10 will be explained. The electronic apparatus 10 is a substantially cuboid shaped apparatus provided with a touch screen 12. For example, the electronic apparatus 10 is a portable game machine, tablet, mobile monitor, or the like. In particular, in the present embodiment, the electronic apparatus 10 is a portable apparatus able to be used in a state placed on a floor surface, desktop surface, or other placement surface or in a state held in the hand of the user.

As shown in FIGS. 1 and 2, the electronic apparatus 10 has a substantially cuboid shaped housing 11, and a touch screen 12 provided at one side surface of the housing 11 and having a substantially rectangular shaped display screen. In particular, the touch screen 12 is provided so that the display screen is positioned over substantially the entire surface of the one side surface of the housing 11. Note that, the housing 11 may also have a shape other than a substantially cuboid shape as long as the display screen of the touch screen 12 is provided on one side surface. Therefore, the housing 11 may have a cross-section of an oval shape or the like or may have corners with chamfered shapes. Similarly, the touch screen 12 may also have a display screen of a shape other than a substantially rectangular as long as provided on one side surface of the housing 11. Therefore, the display screen of the touch screen 12 may be square, oval, or the like, or may have corners with chamfered shapes.

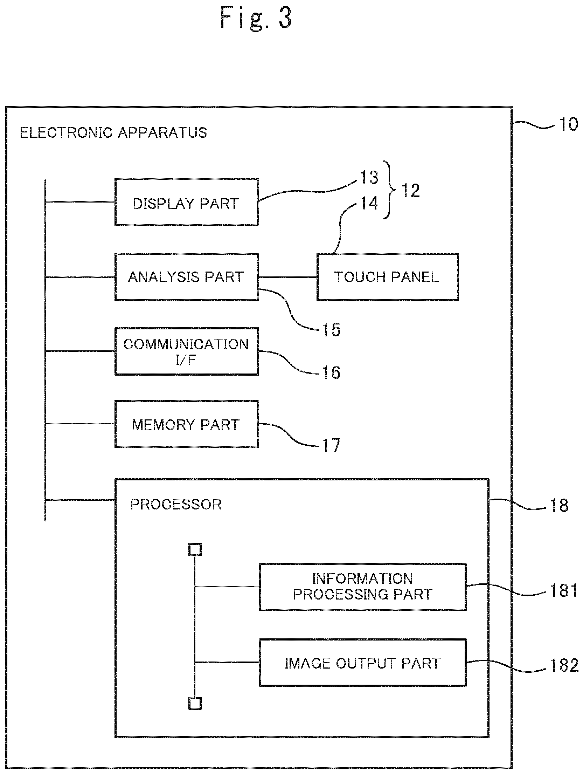

FIG. 3 is a block diagram showing the configuration of the electronic apparatus 10. As shown in FIG. 3, the electronic apparatus 10 has, as electronic components, a display part 13, touch panel 14, analysis part 15, communication interface (communication I/F) 16, memory part 17, and processor 18. The display part 13, analysis part 15, communication interface 16, and memory part 17 are connected to be able to communicate with the processor 18 through signal wires. Further, the display part 13 and the touch panel 14 configure the touch screen 12. Therefore, the touch screen 12 has the display part 13 and the touch panel 14.

The display part 13 is a device for displaying an image. For example, it is a liquid crystal display, EL (electroluminescence) display, or plasma display. The display part 13 has a flat surface and displays a still image or moving image in accordance with a signal output from the processor 18.

The touch panel 14 is arranged at a position superposed with the display part 13, in particular, in the present embodiment, is arranged over the entire surface of the display part 13. The surface of the touch panel 14 at the opposite side from the display part 13 side forms the display screen of the touch screen 12. The touch panel 14 is an electrostatic capacity type touch panel which detects an object (human finger or the like) contacting or approaching the touch panel, based on a change of the electrostatic capacity between the object on the surface of the touch panel 14 and the touch panel. In particular, in the present embodiment, the touch panel 14 is mutual capacitance type touch panel able to detach multiple touches.

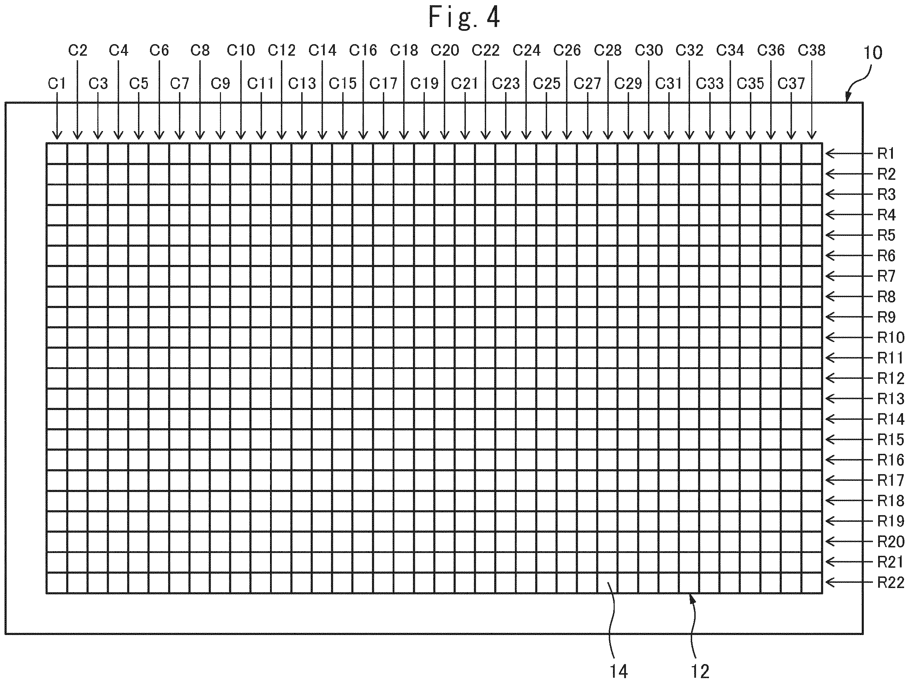

The touch panel 14 detects a change of electrostatic capacity accompanying the approach of an object to each section of the surface of the touch panel 14 divided into a matrix. FIG. 4 shows one example of sections of the surface of the touch panel 14 divided into a matrix. In the example shown in FIG. 4, 22 rows R1 to R22 of sections are arranged in the short side direction of the rectangular shaped touch panel 14, and 38 columns C1 to C38 of sections are arranged in the long side direction. For example, if the user touches a region at the top left of the touch panel 14 shown in FIG. 4, the electrostatic capacity detected at the section positioned at the row R1 and column C1 and its surrounding sections changes and the fact of the user touching the section positioned at the row R1 and column C1 is detected.

In more detail, the touch panel 14 has a plurality of transparent sensor electrodes arranged in a matrix. The sensor electrodes are, for example, formed by ITO (indium tin oxide) or another transparent electroconductive material. In particular, in the present embodiment, the touch panel 14 has drive side sensor electrodes extending in the row direction, and reception side sensor electrodes extending in the column direction. These drive side sensor electrodes and reception side sensor electrodes are arranged in a lattice shape. Further, a pulse voltage is applied so that a weak electric field is generated between the drive side sensors electrode and the reception side sensor electrodes. If a human finger or other object approaches these sensor electrodes and an electrostatic capacity is formed between the sensor electrodes and the object, the electric field generated between the sensor electrodes is decreased and the charge at the reception side sensor electrodes is decreased along with this.

Note that, in the present embodiment, as the touch panel 14, a mutual capacitance type touch panel is used. However, as long as the touch panel 14 is an electrostatic capacity type touch panel, a self capacitance type or any other type of touch panel can be used. Further, in the present embodiment, the sections of the touch panel 14 are arranged as shown in FIG. 4. However, the sections of the touch panel 14 can be arranged in any way as long as being formed in a matrix. Further, in the present embodiment, the sensor electrodes of the touch panel 14 are arranged in a lattice. However, the sensor electrodes may employ any known arrangement of electrodes such as the arrangement having a diamond pattern or flower pattern, and the arrangement having comb shaped drive side electrodes and reception side electrodes for each section, or the like. Further, in the present embodiment, the touch panel 14 outputs the distribution C(x,y) of the electrostatic capacity, but may also output the value of another parameter relating to the electrostatic capacity. For example, the touch panel 14 may also output the distribution of the distribution R(x,y) of the current values detected at the sensor electrodes. In this case, at the processor 18, the distribution C(x,y) of the electrostatic capacity is calculated from the distribution R(x,y) of the current values.

The analysis part 15 is a circuit which is connected to the touch panel 14 and identifies coordinates which an object such as a finger of a person approaches based on output from sensor electrodes of the touch panel 14. For example, if a finger of a person or the like contacts the touch panel 14, the electrostatic capacity will change at a plurality of sections and accordingly a change in electrostatic capacity will be detected at a plurality of sensor electrodes. The analysis part 15 identifies the coordinates which an object such as a finger of a person contacts based on the change of electrostatic capacity thus detected by the plurality of sensor electrodes. Note that, the coordinates which an object contacts may also be identified not by the analysis part 15, but by the processor 18.

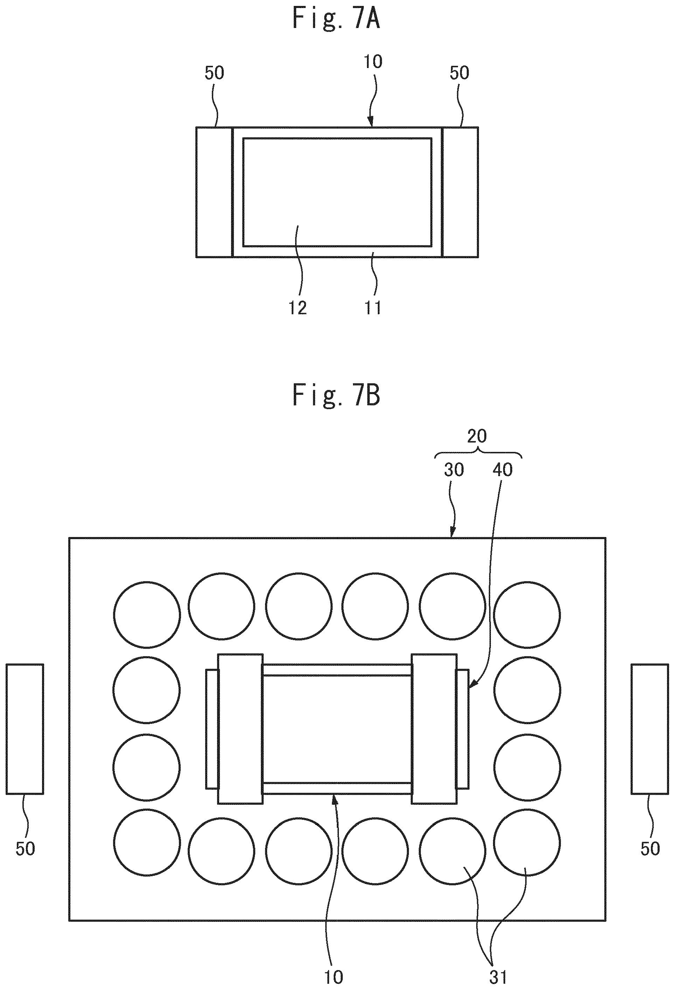

The communication interface 16 is an interface for communication with apparatuses outside of the electronic apparatus 10. In the present embodiment, the communication interface 16, for example, is a wireless communication module for communication compliant with any communication standards (for example, Bluetooth (*Registered Trademark*)*,* Wi-Fi (*Registered Trademark*) ) established by the IEEE, ISO, IEC, or the like, so as to enable the electronic apparatus 10 to communicate wirelessly with an operating device 50 described below, or the like. Note that, in the present embodiment, the communication interface 16 has a connector for being connected to a connector provided with the operating device 50, so as to enable wired communication with the operating device 50 when the operating device 50 is attached to the electronic apparatus 10 as shown in Fig. 7A.

The memory part 17, for example, has a volatile semiconductor memory (for example, RAM), nonvolatile semiconductor memory (for example, ROM), or the like. Furthermore, the memory part 17 may have a hard disk drive (HDD), solid state drive (SSD), or optical recording medium. Further, a part of the memory part 17 may be a detachable removable medium. The memory part 17 stores computer programs for performing various processing at the processor 18, various data used when various processing is performed by the processor 18, or the like. The computer programs include an OS program, application programs (for example, game programs), or the like.

The processor 18 has one or more CPUs (central processing units) and their peripheral circuits. The processor 18 may further have a processing circuit such as a logical operation unit or numerical operation unit. The processor 18 performs various processing based on computer programs stored in the memory part 17. In particular, in the present embodiment, the processor 18 has an information processing part 181 performing processing based on operating information or the like at the touch panel 14 when a computer program (OS program or application program) is run, and an image output part 182 outputting image data of the image to be shown at the display part 13.

The information processing part 181 receives operating information at the touch panel 14 from the analysis part 15. Further, the information processing part 181 may receive the operating information of the operating device 50 described below, from the communication interface 16. Further, the information processing part 181 takes out the necessary data from the memory part 17. The information processing part 181 performs processing in accordance with a computer program run based on the touch panel 14 or the operating information of the operating device 50 and the data stored in the memory part 17, or the like. As a result, the information processing part 181 generates image data to be displayed at the display part 13 and data to be stored in the memory part 17. Note that, the information processing part 181 may generate audio data, vibration data or the like, if the electronic apparatus 10 or the operating device 50 has other notification device such as a speaker, vibration generator or the like.

The image output part 182 outputs image data generated by the information processing part 181 to the display part 13. Note that, the image output part 182 may also output image data to a separate monitor, for example, if the electronic apparatus 10 is connected to another monitor (not shown).

### <Input Device>

Next, referring to FIGS. 1, 2, 5, and 6, the input device 20 will be explained. The input device 20 inputs instructions to the electronic apparatus 10 through the touch screen 12 of the electronic apparatus 10 in accordance with an operation at an operating part of the input device 20 by the user if there is such an operation. The input device 20 has a board 30 having a plurality of operating parts 31 and sockets 40 having pluralities of electrodes 43.

Here, FIG. 1 shows the state where the input device 20 is attached to the electronic apparatus 10, while FIG. 2 shows the state where the input device 20 is not attached to the electronic apparatus 10. As will be understood from these FIGS. 1 and 2, in the present embodiment, the sockets 40 are attached to the electronic apparatus 10 at the two short sides of the display screen of the rectangular shaped touch screen 12.

Further, as will be understood from FIGS. 1 and 2, the sockets 40 are formed to be able to be detached from the board 30. When the input device 20 is attached to the electronic apparatus 10, the sockets 40 are attached to the board 30. On the other hand, when attaching the electronic apparatus 10 to the input device 20 or when detaching the electronic apparatus 10 from the input device 20, the sockets 40 are detached from the board 30. In particular, in the present embodiment, the board 30 is formed line symmetrically up-down and left-right in FIG. 1. Further, the two sockets 40 have the same configurations. Therefore, the two sockets 40 can respectively be attached to both the left and right of the electronic apparatus 10 in FIG. 1. Further, the electronic apparatus 10 can be attached in the reverse direction in the up-down direction in FIG. 1 with respect to the board 30.

The sockets 40 are formed to be able to be fastened to the board 30 at predetermined positions by any method. Specifically, for example, magnets are buried in the sockets 40 and metal is buried in the board 30, whereby the sockets 40 are fixed to the board 30 by magnetic force. Alternatively, the sockets 40 may be provided with latch mechanisms and be fastened to the board 30 by the latch mechanisms engaging with claws of the board 30 or the like. In this way, the sockets 40 are formed to be able to be detached from the board 30, and due to this, the input device 20 can be easily attached to and detached from the electronic apparatus 10.

### <<Board>>

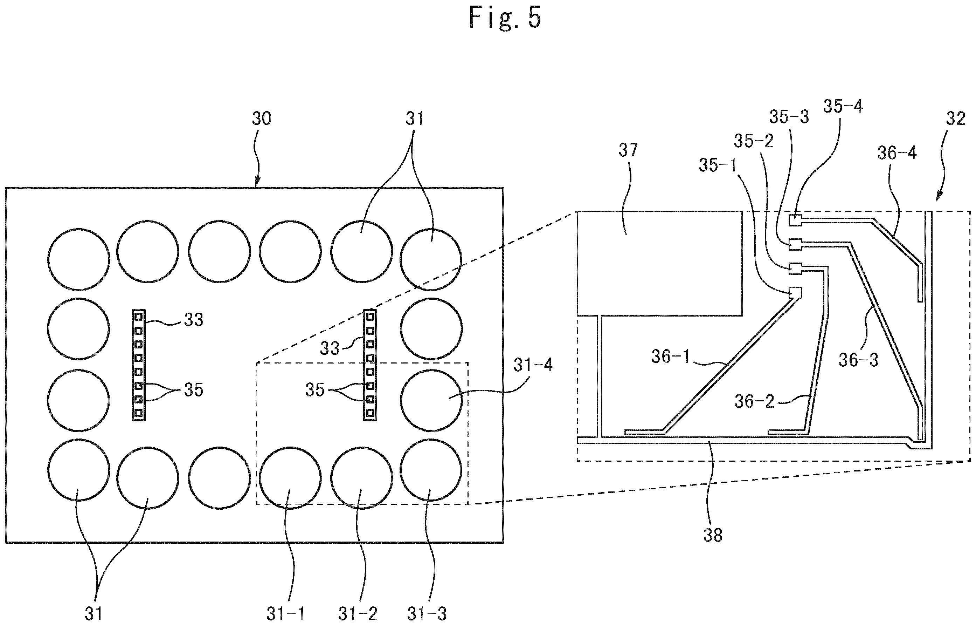

Referring to FIGS. 1, 2, and 5, the board 30 will be explained. FIG. 5 is a plan view showing the board 30 of the input device 20. In particular, FIG. 5 shows a plan view of the board 30 in the state where the sockets 40 are detached and shows the configuration of an electroconductive member 32 buried in the board 30, regarding a partial region of the board 30.

As shown in FIGS. 1 and 5, the board 30 is formed into a rectangular shape and has a first surface (front surface), and a second surface (rear surface) formed at the opposite side from the first surface. The board 30 is configured so that the electronic apparatus 10 is placed at the center of its first surface. In particular, in the present embodiment, the electronic apparatus 10 is placed so that the long sides of the display screen of the rectangular shaped touch screen 12 of the electronic apparatus 10 become parallel to the long sides of the rectangular shaped board 30. The board 30 has a plurality of operating parts 31 able to be operated by the user, an electroconductive member 32 buried in the board 30, and terminal-use openings 33.

The operating parts 31 are operated by the user and, for example, include buttons, switches, or the like. In the example shown in FIGS. 1 and 5, the operating parts 31 are formed as circular push buttons. However, the operating parts 31 may be buttons or switches having other shapes such as rectangular shape, oval shape, cross shape, or the like.

As shown in FIGS. 1 and 5, in the present embodiment, a plurality of operating parts 31 are provided on the first surface on which the electronic apparatus 10 is placed. Therefore, it becomes possible for multiple users to operate the operating parts 31 around a single board 30 while viewing the display screen of the touch screen 12 of the electronic apparatus 10.

Further, in the present embodiment, the board 30 is provided with 16 operating parts 31 from the first operating part 31-1 to the 16^{th} operating part 31-16. In the present embodiment, these plurality of operating parts 31 are arranged so as to surround the four sides of the electronic apparatus 10 (entire circumference) when viewed in a direction perpendicular to the display screen of the touch screen 12 in the state where the input device 20 is attached to the electronic apparatus 10 (state of FIG. 1) (below, simply referred to as "when viewed in a direction perpendicular to the display screen at the time of attachment of the input device 20")

In particular, in the present embodiment, the first operating part 31-1 to third operating part 31-3 and the 14^{th} operating part 31-14 to the 16^{th} operating part 31-16 are arranged along one side (first side) among the two long sides of the display screen of the touch screen 12. Further, the sixth operating part 31-6 to the 11^{th} operating part 31-11 are arranged along the long side (second side) facing the first side of the display screen of the touch screen 12. In addition, the third operating part 31-3 to sixth operating part 31-6 are arranged along one side (third side) among the two short sides of the display screen of the touch screen 12. Further, the 11^{th} operating part 31-11 to the 14^{th} operating part 31-14 are arranged along the short side (fourth side) facing the third side of the display screen of the touch screen 12.

Therefore, in the present embodiment, the operating parts 31 include the first set of operating parts (first operating part 31-1, second operating part 31-2, 15^{th} operating part 31-15, 16^{th} operating part 31-16, and seventh operating part 31-7 to 10^{th} operating part 31-10) arranged so as to straddle the first side and second side of the display screen of the touch screen 12 when viewed in a direction perpendicular to the display screen at the time of attachment of the input device 20. In addition, the operating parts 31 include the second set of operating parts (fourth operating part 31-4 and fifth operating part 31-5 and the 12^{th} operating part 31-12 and 13^{th} operating part 31-13) arranged so as to straddle the third side and fourth side of the display screen of the touch screen 12 when viewed in a direction perpendicular to the display screen at the time of attachment of the input device 20. By the operating parts 31 being arranged so as to surround the four sides of the electronic apparatus 10 in this way, multiple users can surround the electronic apparatus 10 at its four sides and respectively operate the operating parts 31, and therefore new user experiences can be provided.

Further, in the present embodiment, the operating parts 31 are arranged so as to surround the sockets 40 from the three sides when viewed in a direction perpendicular to the display screen at the time of attachment of the input device 20. In the example shown in FIG. 1, the right side socket 40 is surrounded at its three sides by the first operating part 31-1 to the eighth operating part 31-8, while the left side socket 40 is surrounded at its three sides by the ninth operating part 31-9 to the 16^{th} operating part 31-16. Since the operating parts 31 are arranged so as to surround the sockets 40, the sockets 40 are not positioned between the users and the operating parts 31, and therefore the users become able to operate the operating parts 31 without being obstructed by the sockets 40.

In addition, in the present embodiment, when the display screen of the touch screen 12 is used as a reference, the four operating parts 31 of the first operating part 31-1, second operating part 31-2, 15^{th} operating part 31-15, and 16^{th} operating part 31-16 are arranged at the outside of the first side of the display screen (these four operating parts 31 are arranged so as to be at least partially superposed with the first side when viewing the paper surface of FIG. 1 in the top-down direction). Similarly, the four operating parts 31 of the seventh operating part 31-7 to the 10^{th} operating part 31-10 are arranged at the outside of the second side of the display screen (these four operating parts 31 are arranged so as to be at least partially superposed with the second side when viewing the paper surface of FIG. 1 in the top-down direction). Therefore, when the display screen of the touch screen 12 is used as a reference, the same numbers of operating parts 31 are arranged at the outside of each of the long sides of this display screen. In addition, in the present embodiment, when the display screen of the touch screen 12 is used as a reference, the two operating parts 31 of the fourth operating part 31-4 and fifth operating part 31-5 are arranged at the outside of the third side of the display screen (these two operating parts 31 are arranged so as to be at least partially superposed with the third side when viewing the paper surface of FIG. 1 in the top-down direction). Similarly, the two operating parts 31 of the 12th operating part 31-12 and 13th operating part 31-13 are arranged at the outside of the fourth side of the display screen (these two operating parts 31 are arranged so as to be at least partially superposed with the fourth side when viewing the paper surface of FIG. 1 in the top-down direction). Therefore, when the display screen of the touch screen 12 is used as a reference, the same numbers of operating parts 31 are arranged at the outside of each of the short sides of the display screen. As a result, the users positioned at the long sides of the touch screen 12 can operate the same numbers of operating parts 31, while the users positioned at the short sides of the touch screen 12 can operate the same numbers of operating parts 31. Therefore, at least the users positioned so as to face each other can input similar operations, and therefore a new user experience can be provided.

The electroconductive member 32 is buried in the board 30 and accordingly is basically arranged between the first surface and second surface of the board 30. As shown in FIG. 5, the electroconductive member 32 has a plurality of board side terminals 35, terminal side wirings 36 connected to the board side terminals 35, a metal sheet member 37, and a ground side wiring 38 connected to the metal sheet member 37.

In the present embodiment, the electroconductive member 32 has the same numbers of board side terminals 35 and terminal side wirings 36 as the number of operating parts 31. Therefore, in the present embodiment, the electroconductive member 32 has 16 board side terminals 35 from the first board side terminal 35-1 to the 16^{th} board side terminal 35-16 (not shown), and 16 terminal side wirings 36 from the first terminal side wiring 36-1 to the 16^{th} terminal side wiring 36-16 (not shown). Further, the plurality of board side terminals 35 are connected to the corresponding operating parts 31 through terminal side wirings 36. For example, the first board side terminal 35-1 is connected to the first operating part 31-1 through the first terminal side wiring 36-1. In particular, in the present embodiment, the first board side terminal 35-1 to the eighth board side terminal 35-8 (not shown) are arranged aligned at the right side of the board 30, while the ninth board side terminal 35-9 to the 16^{th} board side terminal 35-16 are arranged aligned at the left side of the board 30. The board side terminals 35 at the right side of the board 30 are connected through the terminal side wirings 36 to operating parts 31 arranged at the right side among the operating parts 31 arranged along the long sides of the display screen of the touch screen 12 (first side and second side) and to operating parts 31 arranged along the short side at the right side of the display screen of the touch screen 12 (one of the third side and fourth side). On the other hand, the board side terminals 35 at the left side of the board 30 are connected through the terminal side wirings 36 to operating parts 31 arranged at the left side among the operating parts 31 arranged along the long sides of the display screen of the touch screen 12 (first side and second side) and to operating parts 31 arranged along the short side at the left side of the display screen of the touch screen 12 (the other of the third side and fourth side).

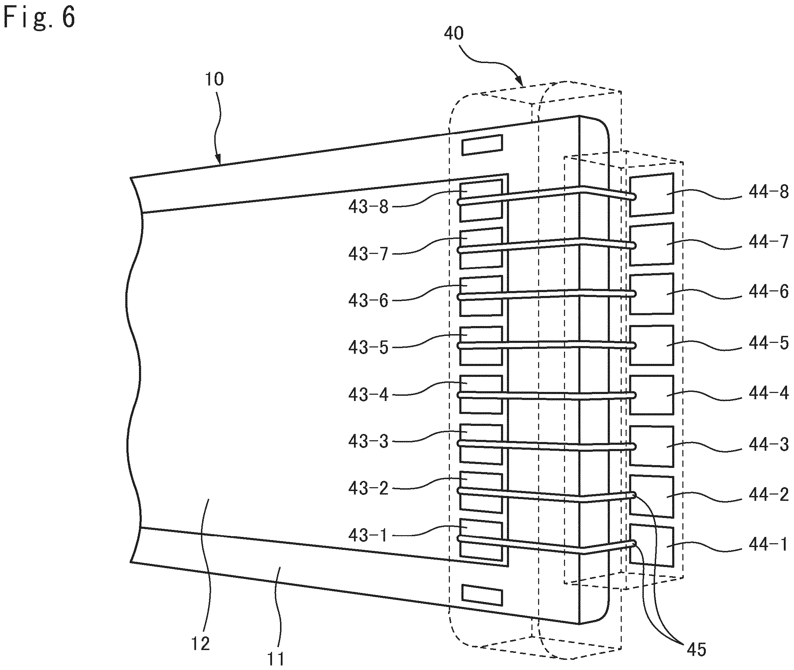

In particular, in the present embodiment, the center board side terminals 35 among the board side terminals 35 arranged aligned at the right side (or left side) of the board 30 are connected to the operating parts 31 arranged along the short side (one of third side and fourth side) at the right side (or left side) of the display screen of the touch screen 12. On the other hand, the board side terminals 35 at both end sides (in FIG. 6, top side and bottom side) among the board side terminals 35 arranged aligned at the right side (or left side) of the board 30 are connected to the operating parts 31 arranged at the right side (or left side) among the operating parts 31 arranged along the long sides of the display screen of the touch screen 12 (first side and second side). As a result, the terminal side wirings 36 between the board side terminals 35 and the operating parts 31 will no longer intersect and the electroconductive member 32 can be made a simpler structure.

On the other hand, the metal sheet 37 is arranged so as to extend completely over the region at which the electronic apparatus 10 is placed. Therefore, the metal sheet 37 is provided at a position superposed with the entire electronic apparatus 10 when viewed in a direction perpendicular to the display screen at the time of attachment of the input device 20. Note that, the metal sheet 37 need not be superposed with the electronic apparatus 10 as a whole as long as at least partially being superposed with the electronic apparatus 10 when viewed in a direction perpendicular to the display screen at the time of attachment of the input device 20. Specifically, it need not be superposed with the entire electronic apparatus 10 as long as at least partially being superposed with the ground electrode arranged at the inside of the electronic apparatus 10. As a result, when the input device 20 is attached to the electronic apparatus 10, a large electrostatic capacity is formed between the metal sheet 37 and the ground electrode of the electronic apparatus 10 and accordingly the potential of the metal sheet 37 can be made substantially the same potential as the ground electrode of the electronic apparatus 10. The metal sheet 37 is connected to all of the operating parts 31 through the ground side wiring 38. Note that, instead of the metal sheet 37 or in addition to the metal sheet 37, the ground side wiring 38 may be configured to be able to be connected with a ground electrode of the electronic apparatus 10. The potential of the ground side wiring 38 can be made the same potential as the potential of the ground electrode of the electronic apparatus 10.

Therefore, the operating parts 31 are connected to the corresponding board side terminals 35 through the terminal side wirings 36 and are connected to the metal sheet 37 through the ground side wiring 38. In the present embodiment, the operating parts 31 are rendered a state where the terminal side wirings 36 connected to the operating parts 31, and the ground side wiring 38 are electrically disconnected when the operating parts 31 are not being pushed by the user. On the other hand, the operating parts 31 are rendered a state where the terminal side wirings 36 connected to the operating parts 31, and the ground side wiring 38 are electrically connected when the operating parts 31 are being pushed by the user. As a result, the potentials of the board side terminals 35 corresponding to the operating parts 31 change due to operation of the operating parts 31 by the user.

The terminal-use openings 33 are openings provided at the first surface side of the board 30. Inside the terminal-use openings 33, a plurality of board side terminals 35 are arranged. Due to the terminal-use openings 33, the board side terminals 35 are exposed to the outside of the board 30. In the present embodiment, two terminal-use openings 33 are provided in the board 30. Inside each terminal-use opening 33, eight board side terminals 35 are arranged.

Note that, in the present embodiment, the metal sheet 37 is buried, but the metal sheet 37 may also be arranged so that it is exposed on the first surface of the board 30.

Further, in the present embodiment, the board 30 is formed to be able to be bent. For example, the board 30, as shown in FIG. 1, is formed so as to be able to be folded into two at the folding line X. In particular, in the present embodiment, the folding line X extends through the center of the board 30, and therefore the operating parts 31 are arranged line symmetrically about the folding line X. Further, if forming the board 30 so as to be able to be folded into two about the predetermined folding line X, the electroconductive member 32 may also be formed divided into two at both sides of the folding line. In this case, metal sheets 37 are respectively provided at the regions at both sides of the folding line and are connected to the operating parts 31 and board side terminals 35 arranged in the corresponding regions. By enabling the board 30 to bend in this way, the board 30 can be easily carried.

Note that, in the present embodiment, one board side terminal 35 is connected to one operating part 31. However, a plurality of board side terminals 35 may also be connected to one operating part 31. For example, if the operating part 31 is a cross button, four board side terminals 35 may be connected to one operating part 31.

Further, in the present embodiment, at the board 30, 16 operating parts 31 and their corresponding 16 board side terminals 35 and terminal side wirings 36 are provided. However, at the board 30, another number of operating parts 31 or the like may be provided. In this case, the shapes of the sockets 40 are left as they are while the arrangements of the operating parts 31 and board side terminals 35 and the shapes of the terminal side wirings 36 are changed.

In addition, in the present embodiment, the board 30 is formed as a rigid plate-shaped member. However, the board 30 may also, for example, be formed as a sheet-shaped member with flexibility.

### <<Socket>>

Next, referring to FIGS. 1, 2, and 6, the sockets 40 will be explained. FIG. 6 is a perspective view of a socket 40 and electronic apparatus 10 in the state where the socket 40 is attached to the electronic apparatus 10. In particular, in FIG. 6, the body of the socket 40 is shown in a transparent state by broken lines.

A socket 40 is an example of a fastening part for fastening the input device 20 to the electronic apparatus 10 in a detachable manner. A socket 40 is formed by a nontransparent and nonconductive material. The socket 40 has a recessed part 42, a plurality of electrodes 43, a plurality of socket side terminals 44, and socket wirings 45 connected to the electrodes 43 and socket side terminals 44. Therefore, the socket 40 performs the two functions of fastening the input device 20 with respect to the electronic apparatus 10 while holding the electrodes 43. Due to this, the number of parts of the input device 20 becomes smaller due to this.

The recessed part 42 has a shape complementary with a side part of the electronic apparatus 10. In particular, in the present embodiment, the recessed part 42 has a shape complementary with a side part of the electronic apparatus 10 at a short side of the touch screen 12. Therefore, the recessed part 42 is formed so as to enable the side part of the electronic apparatus 10 to be fit into the recessed part 42. In particular, the recessed part 42, as shown in FIGS. 1 and 6, is formed so that the socket 40 covers a part of the region at the short side of the touch screen 12 when the side part of the electronic apparatus 10 is fit into it. In the present embodiment, the input device 20 has two sockets 40. Into each socket 40, one of the two facing side parts of the electronic apparatus 10 is fit.

Further, as explained above, a socket 40 is fastened to the board 30 in a detachable manner. Therefore, the input device 20 is fastened to the electronic apparatus 10 by the socket 40 being fastened to the board 30 in the state with the electronic apparatus 10 fit in the socket 40. Therefore, the socket 40 fastens the input device 20 to the electronic apparatus 10 in a detachable manner.

The plurality of electrodes 43 are arranged so as to be positioned on the touch screen 12, in particular on the touch panel 14 of the touch screen 12, when the side part of the electronic apparatus 10 is fit in the socket 40 and the socket 40 is attached to the electronic apparatus 10. In particular, in the present embodiment, the electrodes 43 are arranged in the socket 40 so as to contact the touch panel 14. However, the electrodes 43 may also be arranged so as not to contact the touch panel 14. However, they are arranged so that even in this case, when the electrostatic capacity between an electrode 43 and corresponding region of the touch panel 14 changes due to an operating part 31 corresponding to the electrode 43 being operated and the potential of the electrode 43 changing, the change in the electrostatic capacity can be sufficiently detected by the touch panel 14. Further, the electrodes 43 may also be arranged on the surfaces of the sockets 40.

Further, the surface of the touch screen 12 where the plurality of electrodes 43 are arranged is covered by the nontransparent socket 40, when the socket 40 is attached to the electronic apparatus 10. In other words, the socket 40 functions as a nontransparent covering part covering the surface of the touch screen 12 where the plurality of electrodes 43 are arranged. By the electrodes 43 being covered by the socket 40 in this way, the user can be prevented from touching the electrodes 43. Further, by the surface of the touch screen 12 where the electrodes 43 are arranged being covered by the socket 40, the user can concentrate more on the screen displayed at the touch screen 12 not covered by the socket 40. Further, the socket 40 is formed by a nonconductive material, therefore by the electrodes 43 being covered by the socket 40, the electrostatic capacity between an electrode 43 and the touch panel 14 is kept from changing due to the hand of the user or other external factor.

The plurality of electrodes 43 are arranged at different regions on the touch panel 14. In the present embodiment, as shown in FIG. 6, the plurality of electrodes 43 are arranged aligned along a short side of the display screen of the touch screen 12 on the touch panel 14. In particular, in the present embodiment, the plurality of electrodes 43 are arranged aligned in a single row along a short side of the display screen of the touch screen 12, in particular, adjacent to the short side. However, the plurality of electrodes 43 may also be arranged aligned in multiple rows along a short side of the display screen. Further, the plurality of electrodes 43 are arranged at the socket 40 so as to be positioned on the touch panel 14 at a region where the socket 40 covers the touch screen 12 when a side part of the electronic apparatus 10 is fit. In particular, in the present embodiment, the electrodes 43 are arranged so that the inside end of the socket 40 (center side of the touch panel 14) is positioned more inside than the inside ends of the electrodes 43. Due to this, the electrodes 43 are no longer exposed to the outside, and therefore some sort of member contacting an electrode 43 from the outside and the potential of the electrode 43 ending up changing is suppressed.

In this regard, if the plurality of electrodes 43 were arranged along a long side of the display screen of the touch screen 12 and the socket 40 was formed to cover the part of the region of the touch screen 12 at the long side, the region of the touch screen 12 which the user could visually confirm would become an elongated shape and the visual confirmation ability of the user would fall. As opposed to this, in the present embodiment, the plurality of electrodes 43 are arranged along a short side of the display screen of the touch screen 12 while the socket 40 is formed so as to cover part of the regions at the short side of the touch screen 12. Therefore, the user recognition ability is kept from decreasing.

In the present embodiment, one socket 40 is provided with eight electrodes 43 of the first electrode 43-1 to the eighth electrode 43-8. The number of electrodes 43 is equal to the number of board side electrodes 35 arranged inside one terminal-use opening 33.

The plurality of electrodes 43 are connected to the respective socket side terminals 44 through the socket wirings 45. In the present embodiment, a socket 40 is provided with eight socket side terminals 44 from the first socket side terminal 44-1 to the eighth socket side terminal 44-8. The socket side terminals 44 are electrically connected to the corresponding board side terminals 35 of the board 30 when the socket 40 is fastened to the board 30. For example, the first socket side terminal 44-1 is connected to the first board side terminal 35-1. As a result, the first electrode 43-1 is connected to the first operating part 31-1 and accordingly can be connected with the metal sheet 37 through the first operating part 31-1. In other words, the metal sheet 37 is formed to be able to connect with a plurality of electrodes 43 in accordance with the operation of the operating part 31.

In the present embodiment, the socket side terminals 44 of the socket 40 fastened to the right side of the board 30 are connected to the board side terminals 35 at the right side of the board 30. Therefore, the plurality of electrodes 43 arranged aligned along the short side at the right side of the display screen of the touch screen 12 are connected to the operating parts 31 arranged at the right side among the operating parts 31 arranged along the long sides (first side and second side) of the display screen of the touch screen 12 and the operating parts 31 arranged along the short side at the right side of the display screen of the touch screen 12 (one of third side and fourth side). On the other hand, the socket side terminals 44 of the socket 40 fastened to the left side of the board 30 are connected to the board side terminals 35 at the left side of the board 30. Therefore, the plurality of electrodes 43 arranged aligned along the short side at the left side of the display screen of the touch screen 12 are connected to the operating parts 31 arranged at the left side among the operating parts 31 arranged along the long sides of the display screen of the touch screen 12 (first side and second side) and the operating parts 31 arranged along the short side at the left side of the display screen of the touch screen 12 (the other of the third side and fourth side).

In the thus configured input device 20, if an operating part 31 is operated by the user, the potential of the electrode 43 corresponding to the operating part 31 changes. In other words, in the input device 20, the electrodes 43 are connected to the operating parts 31 so that their potentials change in accordance with the states of operation of the operating parts 31 corresponding to the electrodes 43. In particular, in the present embodiment, if an operating part 31 is pushed by the user, the potential of the electrode 43 corresponding to the operating part 31 becomes a potential substantially the same as the ground electrode of the electronic apparatus 10. If the potential of an electrode 43 changes in this way, the electrostatic capacity between the electrode 43 and the region on the touch panel 14 corresponding to the electrode 43 changes. The change in the electrostatic capacity is detected by a sensor electrode of the touch panel 14.

Specifically, for example, if the user pushes the first operating part 31-1, the potential of the first electrode 43-1 connected to the first operating part 31-1 through the first terminal side wiring 36-1, first board side terminal 35-1, first socket side terminal 44-1, and socket wiring 45 changes. If the potential of the first electrode 43-1 changes, at the region of the touch panel 14 corresponding to the first electrode 43-1, specifically, for example, the four sections positioned at the intersections of the R21 row, R22 row and the C37 column, C38 column, the electrostatic capacity between the first electrode 43-1 and these sections changes and the change in the electrostatic capacity is detected by the sensor electrodes corresponding to these sections. Therefore, in the present embodiment, an operation at the operating part 13 by the user can be detected by the touch panel 14.

### <Operating Device>

Next, referring to FIGS. 7A and 7B, an operating device 50 of the electronic apparatus set 1 will be explained. The electronic apparatus set 1 has operating devices 50 in addition to the electronic apparatus 10 and input device 20. FIGS. 7A and 7B are views schematically showing the electronic apparatus set 1 including operating devices 50.

An operating device 50 is a device for a user to input operating information to the electronic apparatus 10. Specifically, the operating device 50 is a controller having push buttons, a cross button, a joystick, or the like. The operating device 50 sends operating information of these buttons and joystick operated by the user to the electronic apparatus 10.

The operating device 50 is formed to be able to be attached to the electronic apparatus 10. In particular, in the present embodiment, operating devices 50, as shown in FIG. 7A, are attached to side parts of the electronic apparatus 10 at the short sides of the touch screen 12. If the operating device 50 is attached to the electronic apparatus 10 in this way, the electronic apparatus 10 communicates with the operating device 50 though the communication interface 16 by wire. On the other hand, the operating device 50 is formed to be able to be detached from the electronic apparatus 10. If the operating device 50 is detached from the electronic apparatus 10 in this way, the electronic apparatus 10 communicates with the operating device 50 through the communication interface 16 wirelessly. In either case, operating information of the operating device 50 is input to the processor 18 through the communication interface 16 of the electronic apparatus 10. In this case, the information processing part 181 runs processing at an OS program or application program based on the operating information input from the operating device 50.

Further, in the present embodiment, as explained above, the input device 20 can be attached to the electronic apparatus 10. The input device 20 is also attached to side parts of the electronic apparatus 10 at short sides of the touch screen 12, and therefore the input device 20 (in particular, the sockets 40) is attached to the attachment positions of the operating devices 50 when the operating devices 50 are detached from the electronic apparatus 10. In this case as well, the operating devices 50 can communicate with the electronic apparatus 10 wirelessly and accordingly operating information at the operating devices 50 is input to the processor 18 through the communication interface 16 of the electronic apparatus 10. Therefore, if the operating devices 50 are detached from the electronic apparatus 10 and the input device 20 is attached to the electronic apparatus 10, input of operating information to the processor 18 at the operating devices 50 and input of operations by the operating parts 31 of the input device 20 through the touch screen 12 to the processor 18 can be performed in parallel or simultaneously. In other words, operating information for running processing at the same application program being run at the processor 18 can be input from the operating devices 50 and the operating parts 31 of the input device 20 to the processor 18 of the electronic apparatus 10 in parallel or simultaneously.

In this way, in the present embodiment, even if the input device 20 is attached to the electronic apparatus 10, operating information by the operating devices 50 can be input to the electronic apparatus 10 wirelessly. As a result, input to the electronic apparatus 10 can be performed from both the input device 20 and operating devices 50, and therefore a new user experience can be provided. Further, since the operating device 50 has a cross button, joystick or the like in addition to push buttons, the operating device 50 can be used to perform input different from the input device 20. For this reason, a user can selectively use the input device 20 and the operating device 50 in accordance with the application, and therefore the operability by the user can be improved. In particular, in the present embodiment, it is possible to input operations from operating devices 50 and operating parts 31 of the input device 20 in parallel or simultaneously in order to run processing at the same application program and accordingly it is possible to provide a new user experience.

### <Variations>

In the above first embodiment, the operating parts 31 are arranged to surround the four sides of the electronic apparatus 10 when viewed in the direction perpendicular to the display surface at the time of attachment of the input device 20. However, as long as they are arranged to surround at least three sides, they may not be arranged to surround four sides. In this case as well, it is possible for a plurality of users to surround the electronic apparatus 10 at three sides to respectively operate the operating parts 31 and accordingly possible to provide a new user experience. Note that, the operating parts 31 may also be arranged at only one side or two sides of the electronic apparatus 10.

Further, in the above first embodiment, when the display screen of the touch screen 12 is used as a reference, the same number of operating parts 31 are arranged at the outside of each of the long sides of the display screen, and the same number of operating parts 31 are arranged at the outside of each of the short sides of the display screen. However, the number of the operating parts 31 arranged at the outside of each of the long sides or short sides does not necessarily have to be the same.

In addition, in the above first embodiment, when the input device 20 is attached to the electronic apparatus 10, the electronic apparatus 10 is placed on the board 30 of the input device 20. However, for example, it is also possible to provide an opening part at the center of the board 30 and to insert the electronic apparatus 10 in the opening part when the input device 20 is attached to the electronic apparatus 10.

Further, in the above first embodiment, the sockets 40 are attached to the electronic apparatus 10 at both short sides of the rectangular shaped touch screen 12. However, the sockets 40 may also be L-shaped so as to be attached to the electronic apparatus 10 at one short side and one long side of the touch screen 12. Alternatively, the sockets 40 may be U-shaped so as to be attached at one long side and two short sides of the touch screen 12. Furthermore, the sockets 40 may be attached to the electronic apparatus 10 so as to surround the four sides of the electronic apparatus 10. In this case, the operating parts 31 are arranged so as to surround the four sides of the sockets 40 when viewed in the direction perpendicular to the display screen at the time of attachment of the input device 20.

Further, in the above first embodiment, the plurality of electrodes 43 are arranged along the short sides of the display screen of the touch screen 12. However, a part or all of the plurality of electrodes 43 may also be arranged along the long sides of the display screen of the touch screen 12. In particular, if the socket 40 is attached to the electronic apparatus 10 at the long side of the touch screen 12, the plurality of electrodes 43 may also be arranged along the long side at the side where the socket 40 is attached.

Further, in the above first embodiment, the input device 20 is attached to the electronic apparatus 10 by fitting the sockets 40 of the input device 20 to the electronic apparatus 10 and fastening the sockets 40 to the board 30. However, the input device 20 may be attached to the electronic apparatus 10 in any manner, as long as the electrodes 43 of the input device 20 can be maintained in a state arranged at predetermined positions on the touch panel 14.

Further, in the above first embodiment, the socket 40 functions as a fastening part for fastening the input device 20 to the electronic apparatus 10 in a detachable manner and a covering part for covering the surface of the touch screen 12 where the electrodes 43 are arranged. However, the socket 40 may also function as only one of these. For example, if the socket 40 functions as a fastening part but does not function as a covering part, a member separate from the socket 40 may also be provided as the covering part. In this case, the electrodes 43 are not arranged at the socket 40 and the electrodes 43 are arranged at the separate member provided as the covering part. Similarly, if the socket 40 functions as a covering part but do not function as a fastening part, a member separate from the socket 40 may also be provided as the fastening part. In this case, the electrodes 43 are arranged at the socket 40. Further, members separate from the socket 40 may also be provided as a fastening part for fastening the input device 20 to the electronic apparatus 10 in a detachable manner and as a covering part for covering the surface of the touch screen 12 where the electrodes 43 are arranged.

Further, in the above first embodiment, the operating part 31 is a member for connecting and disconnecting corresponding terminal-side wiring 36 and ground-side wiring 38 by user operation. However, the operating part 31 may also be any member as long as the potential of the electrode 43 connected to the operating part 31 changes in accordance with the state of operation of the operating part 31 by a user. For example, the operating part 31 may be electrode plate connected to the corresponding electrode 43. In this case, if a user touches the electrode plate, the potential of the electrode 43 corresponding to the electrode plate is connected to the body of the user and becomes a ground potential, and thereby potential of the electrode 43 changes. Further, in this case, since the potential of the electrode 43 does not have to be made to match the potential of the ground electrode of the electronic apparatus 10, the board 30 does not have to be provided with the metal plate 37 and ground-side wiring 38.

Further, in the above first embodiment, the input device 20 has the board 30 having the operating parts 31, and the sockets 40 having the electrodes 43. However, the input device 20 may have an integral member having the operating parts 31 and electrodes 43 instead of the board 30 and sockets 40. As such a member, for example, a sheet-shaped member having a plurality of operating parts 31 configured as electrodes which a user would contact, and a plurality of electrodes 43 electrically connected with these plurality of operating parts 31 would be conceivable.

### Second Embodiment

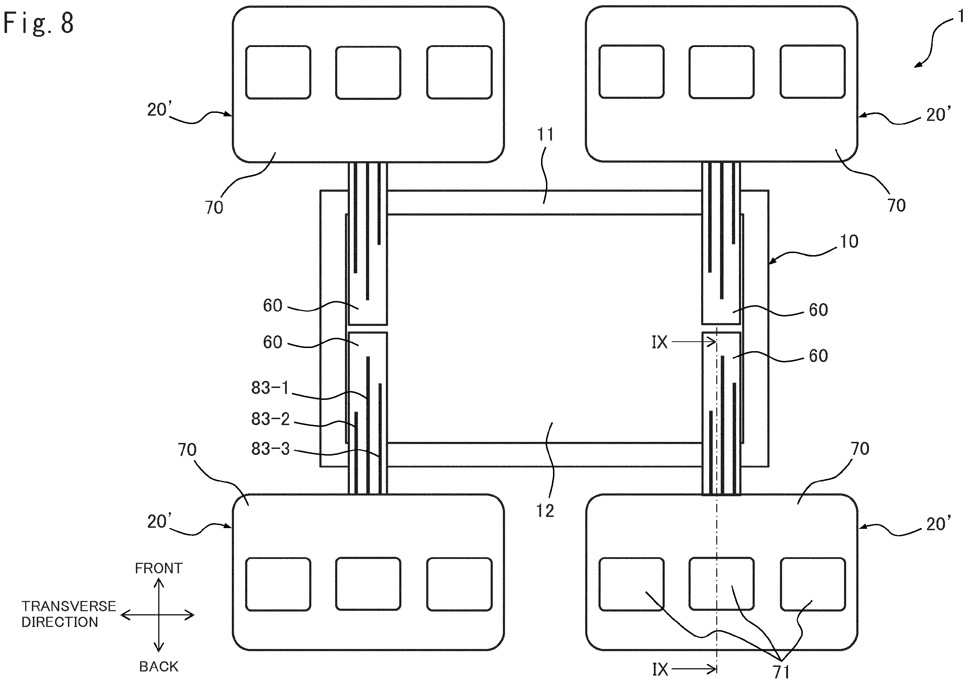

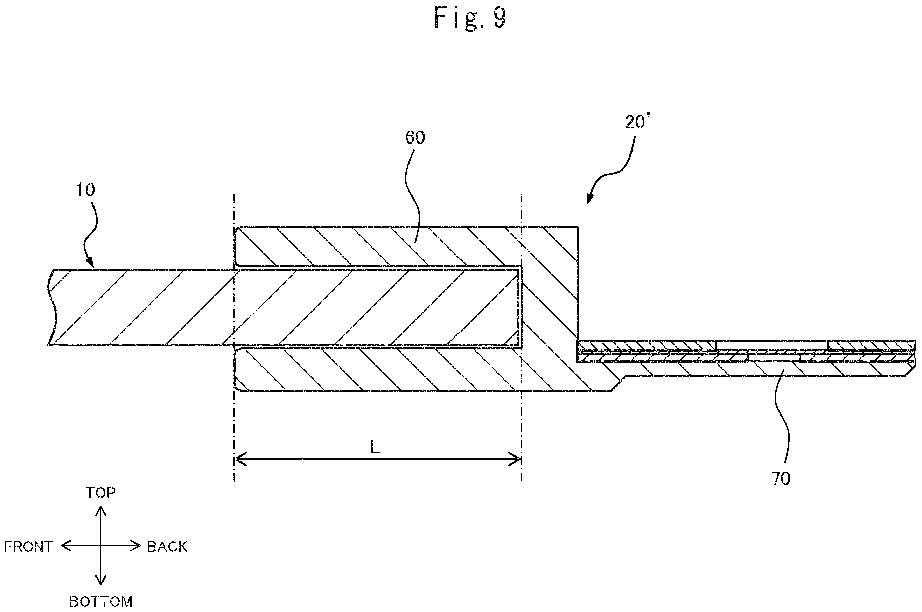

Next, referring to FIGS. 8 and 9, an electronic apparatus set 1 according to a second embodiment will be explained. FIG. 8 is a plan view schematically showing the electronic apparatus set 1 according to the second embodiment. FIG. 9 is a schematic partial cross-sectional side view of a part of the electronic apparatus set 1 seen along the line IX-IX of FIG. 8.

As will be understood from FIGS. 8 and 9, the electronic apparatus set 1 has an electronic apparatus 10 according to the first embodiment, and four input devices 20' able to be attached to the electronic apparatus 10. The electronic apparatus 10 is configured in the same way as the electronic apparatus according to the first embodiment. Further, the electronic apparatus 10, in the same way as the electronic apparatus according to the first embodiment, may be configured to enable operating devices 50 to be attached to the side parts of the electronic apparatus 10 at the short sides of the touch screen 12.

### <Input Devices>

Next, referring to FIGS. 8 to 11, the input devices 20' according to the second embodiment will be explained. An input device 20' performs input to the electronic apparatus 10 through the touch screen 12 of the electronic apparatus 10 in accordance with operation of the operating parts 71 of the input device 20' by the user when such an operation is performed. Each input device 20' has a clip part 60 having a plurality of apparatus-side electrodes 80, and a plate-shaped part 70 having a plurality of operating parts 71.

The clip part 60 is used for attaching the input device 20' to the electronic apparatus 10 in a detachable manner. In particular, in the present embodiment, as shown in FIG. 9, the input device 20' is attached to the electronic apparatus 10 by attaching the clip part 60 to the electronic apparatus 10 so as to sandwich the electronic apparatus 10. The plate-shaped part 70 is fastened to the clip part 60.

Note that, in this Description, a direction in which the clip part 60 is attached to the electronic apparatus 10 will be referred to as the "front" and the opposite direction to front will be referred to as the "back". Further, a direction perpendicular to the touch screen 12 of the electronic apparatus 10 to which an input device 20' is attached will be referred to as the "top-down direction". In particular, a direction at which the touch screen 12 is provided at the electronic apparatus 10 will be referred to as "up". Further, a direction perpendicular to the front-back direction and top-down direction will be referred to as the "transverse direction". FIG. 8 describes directions when the input device 20' at the bottom left of the figure is used as a reference. However, the electronic apparatus 10 and input devices 20' do not necessarily have to be used with the touch screen 12 facing vertically upward. For example, they may also be used so that the touch screen 12 faces the horizontal direction.

### <<Clip Part >>

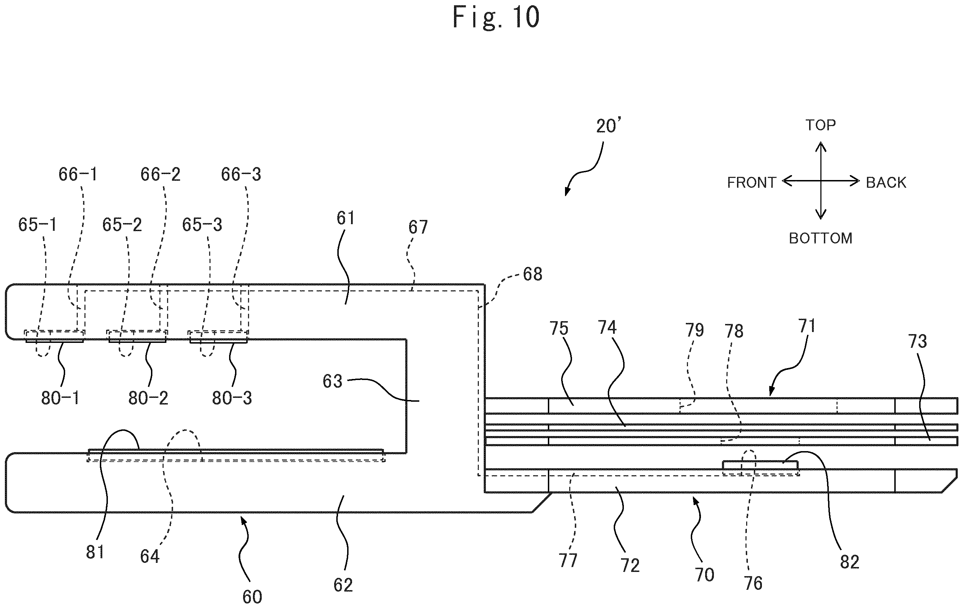

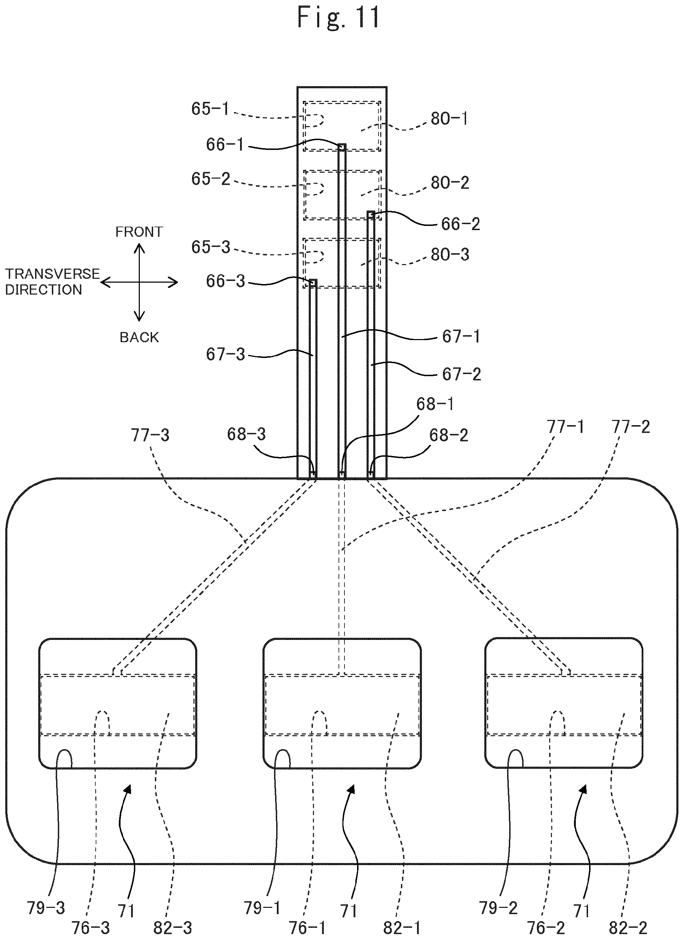

Referring to FIGS. 8 to 11, a clip part 60 will be explained. FIG. 10 is a disassembled side view of an input device 20', while FIG. 11 is a plan view of the input device 20'. In particular, in FIGS. 10 and FIG. 11, the inside structures are shown by broken lines.

The clip part 60 is formed by a nonconductive material. As shown in FIG. 10, the clip part 60 has a top member 61 and a bottom member 62 extending in the front-back direction in parallel with each other, and an intermediate member 63 extending between top member 61 and bottom member 62 in the top-down direction. The top member 61, bottom member 62, and intermediate member 63 are formed integrally by the same material. In the present embodiment, the top member 61, bottom member 62, and intermediate member 63 have rectangular cross-sectional shapes, in particular have the same cross-sectional shapes. Further, the top member 61 and bottom member 62 are configured so that the interval between them becomes slightly larger than the thickness of the electronic apparatus 10.

Further, the clip part 60, as shown in FIG. 10, has an elastic member-use groove 64, electrode-use grooves 65, wiring-use through holes 66, wiring-use upper grooves 67, and wiring-use side grooves 68. These elastic member-use groove 64, electrode-use grooves 65, wiring-use through holes 66, wiring-use upper grooves 67, and wiring-use side grooves 68 are formed at the top member 61, bottom member 62, or intermediate member 63.

The elastic member-use groove 64, as shown in FIG. 10, is formed so as to extend on the top surface of the bottom member 62 in the front-back direction. An elastic member 81 is arranged in this elastic member-use groove 64. In the present embodiment, the elastic member-use groove 64 and elastic member 81 are formed to become rectangular when viewed from above. In particular, the elastic member-use groove 64 is formed to become slightly larger than the elastic member 81 when viewed from above so as to be able to hold the lower part of the elastic member 81. Note that, the elastic member-use groove 64 and elastic member 81 may have shapes other than rectangular ones as long as having shapes complementary with each other so as to enable the elastic member-use groove 64 to hold the lower part of the elastic member 81 inside it.

The elastic member 81 is, for example, formed by a material having elasticity and high in friction coefficient such as urethane. The elastic member 81 is configured so that its top surface sticks out slightly upward from the top surface of the bottom member 62. In particular, in the present embodiment, it is configured so that the interval between the top surface of the elastic member 81 and the bottom surfaces of the later explained apparatus-side electrodes 80 becomes slightly smaller than the thickness of the electronic apparatus 10. By the elastic member 81 being configured in this way, when the electronic apparatus 10 is inserted in the clip part 60, the top surface of the elastic member 81 contacts the bottom surface of the electronic apparatus 10 in a biased state. As a result, the input device 20' attached to the electronic apparatus 10 can be kept from detaching.

Note that, the top member 61, bottom member 62, and intermediate member 63 may be formed by mutually different materials as separate members and later fastened together by fasteners such as screws or the like. Further, the top member 61, bottom member 62, and intermediate member 63 may have cross-sectional shapes other than rectangular ones and may also have mutually different cross-sectional shapes. Further, in the present embodiment, the top member 61, bottom member 62, and intermediate member 63 are fastened with each other, but at least one of the top member 61 and bottom member 62 may be configured to be able to move in a direction approaching the other and a direction separating from the other. In particular, at least one of the top member 61 and bottom member 62 may be biased to approach the other. Due to this, the top member 61 and bottom member 62 can be used to sandwich the electronic apparatus 10 by their biasing force and accordingly can firmly attach the input device 20' to the electronic apparatus 10.

Three electrode-use grooves 65, as shown in FIGS. 10 and 11, are formed at the bottom surface of the top member 61. These three electrode-use grooves 65 are arranged aligned in the front-back direction. Specifically, they are arranged from the front to back in the order of the first electrode-use groove 65-1, second electrode-use groove 65-2, and third electrode-use groove 65-3. Further, apparatus-side electrodes 80 are arranged at the electrode-use grooves 65. Specifically, the first apparatus-side electrode 80-1 is arranged at the first electrode-use groove 65-1, the second apparatus-side electrode 80-2 is arranged at the second electrode-use groove 65-2, and the third apparatus-side electrode 80-3 is arranged at the third electrode-use groove 65-3.

In the present embodiment, the electrode-use grooves 65 and apparatus-side electrodes 80 are formed to become rectangular when viewed from above. In particular, the electrode-use grooves 65 are formed to become slightly broader than the apparatus-side electrodes 80 when viewed from above so as to enable them to hold the upper parts of the apparatus-side electrodes 80. Note that, the electrode-use grooves 65 and apparatus-side electrodes 80 may have shapes other than rectangular ones as long as having shapes complementary with each other so as to enable the lower parts of the apparatus-side electrodes 80 to be held inside the electrode-use grooves 65.

The apparatus-side electrodes 80 are for example formed by a material having elasticity and having electroconductivity such as electroconductive rubber. The apparatus-side electrodes 80 are formed so that their bottom surfaces stick out slightly downward from the bottom surface of the top member 61. By forming the apparatus-side electrodes 80 by a material having elasticity in this way, the input device 20' attached to the electronic apparatus 10 is kept from detaching. In addition, since the apparatus-side electrodes 80 closely contact the touch panel 14 of the electronic apparatus 10, as explained later, a change in the electrostatic capacity generated as a result of operation by the user at the operating part 71 can be suitably transmitted to the touch panel 14.

The wiring-use through holes 66, as shown in FIG. 10, extend running through the inside of the top member 61 upward from the electrode-use grooves 65 to the top surface of the top member 61. The wiring-use through holes 66 are formed in sizes enabling wirings to pass through them. In particular, in the present embodiment, each wiring-use through hole 66 extends upward from the center rear in the transverse direction in the corresponding electrode-use grooves 65. The first wiring-use through hole 66-1 is communicated with the first electrode-use groove 65-1, the second wiring-use through hole 66-2 is communicated with the second electrode-use groove 65-2, and the third wiring-use through hole 66-3 is communicated with the third electrode-use groove 65-3.

The wiring-use upper groove 67 and the wiring-use side groove 68 are respectively formed at the top surface of the top member 61 and the back surface of the intermediate member 63. The wiring-use upper groove 67 and the wiring-use side groove 68 are respectively formed by the width and depth that enables them to hold a wiring. The wiring-use upper groove 67 extend in the front-back direction, while the wiring-use side groove 68 extend in the top-bottom direction. Each wiring-use upper groove 67 is communicated with the corresponding wiring-use through holes 66 and corresponding wiring-use side groove 68 and extends between them. In particular, in the present embodiment, the wiring-use upper groove 67 extends from the corresponding wiring-use through holes 66 to the back end of the top member 61. Further, each wiring-use side groove 68 is communicated with the corresponding wiring-use upper groove 67 and corresponding wiring-use groove 77 (explained later) and extends between them. In particular, in the present embodiment, the wiring-use side groove 68 extend in the top-bottom direction from the top end of the top member 61 to the wiring-use groove 77. In the present embodiment, the first wiring-use upper groove 67-1 communicating with the first wiring-use through hole 66-1 and the first wiring-use side groove 68-1, as shown in FIG. 11, is positioned at the center among three wiring-use upper grooves 67, while the remaining second wiring-use upper groove 67-2 and third wiring-use upper groove 67-3 are positioned at its both sides. However, the first wiring-use upper groove 67-1 communicated with the first wiring-use through hole 66-1 and the first wiring-use side groove 68-1 may also be positioned other than at the center among the three wiring-use upper grooves 67 and the remaining second wiring-use upper groove 67-2 and third wiring-use upper groove 67-3 may also be arranged at any positions in the transverse direction.

Note that, in the present embodiment, three apparatus-side electrodes 80 are provided at the top member 61. However, one, two, or four or more apparatus-side electrodes 80 may also be provided at the top member 61. In this case, the same numbers of electrode-use grooves 65, wiring-use through holes 66, wiring-use upper grooves 67, and the wiring-use side grooves 68 as the number of apparatus-side electrodes 80 are formed.

Further, a cover member covering the top surface of the top member 61 may also be attached to the top surface of the top member 61. Similarly, a cover member covering the back surface of the intermediate member 63 may also be attached to the back surface of the intermediate member 63. Due to this, the wiring-use upper grooves 67 or the wiring-use side grooves 68 can be made to be no longer visible to the user. For example, the cover member may be an insulating member. Due to this, since the apparatus-side electrodes become harder to electrically contact other conductors, operation of operating parts 71 by the user can be made suitably detectable.

### <<Plate-Shaped Part>>

Next, referring to FIGS. 8 to 11, a plate-shaped part 70 will be explained. As shown in FIGS. 8 and 11, the plate-shaped part 70 is connected to the back of the clip part 60 and is formed to extend from the clip part 60 toward both sides in the transverse direction. The plate-shaped part 70 is arranged so that the clip part 60 is connected to its center front side in the transverse direction. Therefore, the input device 20' having the clip part 60 and plate-shaped part 70 is configured in a T-shape. As shown in FIGS. 8 and 11, operating parts 71 operated by the user are arranged aligned in the transverse direction at the plate-shaped part 70.

The plate-shaped part 70 is formed from a plurality of layers. FIG. 10 shows the plurality of layers separated. As shown in FIG. 10, the plate-shaped part 70 has a base member 72, frame member 73, insulating member 74, and surface layer member 75 formed in layers. The base member 72, frame member 73, insulating member 74, and surface layer member 75 all have the same sizes in the front-back direction and transverse direction.

The base member 72 is formed by a nonconductive material. Further, the base member 72 is formed integrally with the clip part 60 by the same material as the clip part 60. The clip part 60 and the base member 72 are for example formed integrally by injection molding or the like.

The base member 72 has electrode-use grooves 76 and wiring-use grooves 77 at its top surface. In the present embodiment, the same number of electrode-use grooves 76 as the number of apparatus-side electrodes 80 provided at the clip part 60 are provided at the base member 72. Therefore, in the present embodiment, three electrode-use grooves 76 are formed at the base member 72. These three electrode-use grooves 76 are arranged aligned in the transverse direction. In the present embodiment, as shown in FIG. 11, the first electrode-use groove 76-1 is arranged at the center, the second electrode-use groove 76-2 is arranged at one side of the first electrode-use groove 76-1 in the transverse direction, and the third electrode-use groove 76-3 is arranged at the other side of the first electrode-use groove 76-1 in the transverse direction.

Further, as shown in FIGS. 10 and 11, operating-side electrodes 82 are arranged at the electrode-use grooves 76. Specifically, the first operating-side electrode 82-1 is arranged at the first electrode-use groove 76-1, the second operating-side electrode 82-2 is arranged at the second electrode-use groove 76-2, and the third operating-side electrode 82-3 is arranged at the third electrode-use groove 76-3.

In the present embodiment, the electrode-use groove 76 and the operating-side electrode 82 are formed so as to become rectangular when viewed from above. In particular, the electrode-use groove 76 is formed to become just slightly broader than the operating-side electrode 82 when viewed from above so as to enable it to hold the lower part of the operating-side electrode 82. Further, in the present embodiment, the operating-side electrode 82 is formed so that the length of its short sides becomes larger than the width of the contact part of a finger when a finger of a person of a general size pushes the operating part 71. Due to this, the change in electrostatic capacity detected at the touch panel 14 when the operating part 71 is operated by a finger of a user can be made as large as possible. Note that, the electrode-use groove 76 and operating-side electrode 82 may have shapes other than rectangular ones as long as having shapes complementary with each other. Further, the electrode-use groove 76 and operating-side electrode 82 may be formed so that their short sides become smaller than the width of the above contact part of a finger of a user.

The operating-side electrodes 82 are formed by a material having electroconductivity, for example, a metal such as copper. The operating-side electrode 82 are formed so that its top surface sticks out slightly upward from the top surface of the base member 72. Note that, the operating-side electrode 82 may also be formed for example by any other material such as an electroconductive rubber as long as the material has electroconductivity.

Further, the wiring-use grooves 77 are formed in the top surface of the base member 72 so as to extend from the connecting part with the clip part 60 to the electrode-use grooves 76. Therefore, the same number of wiring-use grooves 77 as the electrode-use grooves 76 are formed at the base member 72. The wiring-use groove 77 is formed by the width and depth enabling it to hold the wiring. Each electrode-use groove 7 communicates with the corresponding wiring-use side groove 68 of the clip part 60 and corresponding electrode-use groove 76 and extend between them. In the present embodiment, the first wiring-use groove 77-1 is communicated with the first wiring-use side groove 68-1 and the first electrode-use groove 76-1, the second wiring-use groove 77-2 is communicated with the second wiring-use side groove 68-2 and the second electrode-use groove 76-2, and the third wiring-use groove 77-3 is communicate with the third wiring-use side groove 68-3 and the third electrode-use groove 76-3.

The frame member 73 is formed by a nonconductive material. For example, the frame member 73 is formed by the same material as the base member 72. The frame member 73 has a rectangular shaped opening 78 of substantially the same shape as the operating-side electrode 82 and just slightly larger than the operating-side electrode 82, at the same positions as the operating-side electrode 82 when viewed from above. Further, the frame member 73 has a height substantially the same as or just slightly higher than the height by which the top surface of the operating-side electrode 82 sticks out from the top surface of the base member 72. Therefore, if the frame member 73 is arranged on the top surface of the base member 72, the top surface of the frame member 73 will be positioned flush with the top surface of the operating-side electrode 82 or slightly higher than the top surface of the operating-side electrode 82.

Note that, the plate-shaped part 70 does not necessarily have to have the frame member 73. In this case, the electrode-use groove 76 is formed so that the top surface of the apparatus-side electrode 82 becomes flush with the top surface of the base member 72 or become positioned slightly lower than the top surface of the base member 72.

The insulating member 74 is formed by an insulating material. Further, the insulating member 74 is formed by an extremely thin material. Specifically, the insulating member 74 is, for example, paper. If forming the insulating member 74 by paper, the top surface can be drawn on in any way. Therefore, the operating parts 71 can be made any designs. Further, the insulating member 74 which is paper may be configured to be exchangeable. In this case, it becomes possible to change the design of the operating parts 71. Note that the insulating member 74 may also be formed by a material other than paper as long as the material has an insulating property. For example, the insulating member 74 may also be an insulating paint coated on the operating-side electrodes 82 and frame member 73.

In the present embodiment, in this way, the insulating member 74 is arranged on the operating-side electrodes 82. For this reason, a finger of a user or the like will not directly touch the operating-side electrodes 82 and accordingly, if the operating-side electrodes 82 are formed by a metal such as copper, the operating-side electrodes 82 are kept from corroding. Further, since the insulating member 74 is formed by an insulating material, when a finger of a user is positioned on one operating-side electrode 82, the effect due to that is kept from appearing in the electrostatic capacity detected not only at the apparatus-side electrode 80 corresponding to this operating-side electrode 82, but also at the region of the touch panel 14 facing the apparatus-side electrodes 80 corresponding to other operating-side electrodes 82. Note that, if the operating-side electrodes 82 are formed by electroconductive rubber or other material other than a corroding material, the insulating member 74 may not be provided.

Note that, each operating-side electrode 82 forms an operating part 71 together with the insulating member 74 arranged on the operating-side electrode 82. As explained later, when a finger of a user touches the insulating member 74 on the operating-side electrode 82 or a finger of a user approaches the operating-side electrode 82, the change in electrostatic capacity accompanying that is detected by the touch panel 14.

The surface layer member 75 is formed by an insulating material. In particular, in the present embodiment, the surface layer member 75 is formed by a transparent material. For example, the surface layer member 75 is formed by the same material as the base member 72. The surface layer member 75, when viewed from above, has substantially rectangular surface layer openings 79 including the operating-side electrodes 82 and larger than the operating-side electrodes 82. In the present embodiment, the surface layer opening 79, when viewed from above, is formed to have a width the same as the width of the operating-side electrode 82 in the transverse direction and to have a length in the front-back direction longer than the length of the operating-side electrode 82 in the front-back direction. However, the surface layer opening 79 may also be smaller than the operating-side electrode 82 and have a shape other than rectangular one as long as a finger of a user can contact the insulating member 74. In the present embodiment, by the surface layer member 75 being provided with the surface layer openings 79 in this way, the regions near the regions where the operating-side electrodes 82 are provided become recessed from the surface of the surface layer member 75 and a finger of a user becomes easier to guide to the regions near the operating-side electrodes 82.

Further, in the present embodiment, the surface layer member 75 is for example fastened to the base member 72 by a fastener such as a screw (not shown). Due to this, the frame member 73 and insulating member 74 positioned between the surface layer member 75 and the base member 72 are also fastened to the base member 72, in addition to the surface layer member 75. Further, if using a detachable fastener as this fastener, the surface layer member 75 can be detached from the base member 72 and accordingly can be exchanged with an insulating member 74 having a different design. Note that, the base member 72, frame member 73, insulating member 74, and surface layer member 75 may also be adhered together by an adhesive at least at partially adjoining members.

Further, the apparatus-side electrodes 80 and the corresponding operating-side electrodes 82 are connected by corresponding wirings 83 (in FIGS. 10 and 11, to facilitate understanding of the drawings, the wirings 83 are omitted). The first apparatus-side electrode 80-1 is connected to the first operating-side electrode 82-1 by the first wiring 83-1, the second apparatus-side electrode 80-2 is connected to the second operating-side electrode 82-2 by the second wiring 83-2, and the third apparatus-side electrode 80-3 is connected to the third operating-side electrode 82-3 by the third wiring 83-3. Each wiring 83 extends passing through the corresponding wiring-use through hole 66, wiring-use upper groove 67, wiring-use side groove 68, and wiring-use groove 77. For example, the first wiring 83-1 extends passing through the first wiring-use through hole 66-1, the first wiring-use upper groove 67-1, the first wiring-use side groove 68-1, and the first wiring-use groove 77-1.

Note that, at the bottom surface of the base member 72, near the four corners, elastic members such as rubber sticking out downward from the bottom surface of the clip part 60 may be arranged. By arranging such elastic members, it becomes possible to stably place the input device 20' on the placement surface.

### <Manner of Attachment of Input Devices>

Next, referring to FIGS. 8 and 9, the manner of attachment of input devices 20' to the electronic apparatus 10 will be explained. FIGS. 8 and 9 show the state where input devices 20' are attached to the electronic apparatus 10. As will be understood from FIG. 8, in the present embodiment, the input devices 20' are attached to the electronic apparatus 10 so that the clip parts 60 extend in parallel with short sides of the rectangular display screen of the touch screen 12. In particular, in the present embodiment, the input devices 20' are attached to the electronic apparatus 10 so that the clip parts 60 extend on the display screen of the touch screen 12 along the short sides of the display screen.

In the present embodiment, as shown in FIG. 8, four input devices 20' are attached to one electronic apparatus 10. Among these, two input devices 20' are arranged so that their clip parts 60 extend in opposite directions from each other along the same short side of the display screen of the touch screen 12. Therefore, each of the clip parts 60 is configured so that the length L of the top member 61 and bottom member 62 in the front-back direction (see FIG. 9) become less than or equal to half of the length of the short side of the electronic apparatus 10. For example, each of the clip parts 60 is configured so that the length of the top member 61 and bottom member 62 in the front-back direction becomes 1/2 to 1/4 or 1/2 to 1/3 of the length of the short side of the electronic apparatus 10.

In this regard, if the input devices 20' were attached to the electronic apparatus 10 so that the clip parts 60 were arranged to extend along long sides of the display screen of the touch screen 12 and cover parts of the regions of the long sides of the touch screen 12, the region of the touch screen 12 which the user could see would become narrow in shape and the visibility to the user would fall. As opposed to this, in the present embodiment, the input devices 20' are attached to the electronic apparatus 10 so that the clip parts 60 are arranged to extend along the short sides of the display screen of the touch screen 12 and cover parts of the regions of the short sides of the touch screen 12. Therefore, the visibility to the user is kept from falling.

Further, in the present embodiment, the input devices 20' are attached to the long sides of the electronic apparatus 10. Therefore, according to the present embodiment, the input devices 20' can be attached to the electronic apparatus 10 even in a state where the above-mentioned operating devices 50 are attached to the electronic apparatus 10. For this reason, a user can perform operations by the operating devices 50 as well in addition to the input devices 20'.

Further, each of the input devices 20' of the present embodiment is formed into T-shape so that the plate-shaped part 70 extends perpendicular to the clip part 60. For this reason, the operating parts 71 of the plate-shaped part 70 become arranged along the long side of the electronic apparatus 10, and therefore a user can operate the operating parts 71 without moving away from the display screen of the touch screen 12 of the electronic apparatus 10.

Note that, the manner of attachment of the input devices 20' to the electronic apparatus 10 shown in FIG. 8 is just one example, And the input devices 20' may be attached to the electronic apparatus 10 in any way as long as the plurality of apparatus-side electrodes 80 of the clip parts 60 face the display screen of the touch screen 12. Therefore, the input devices 20' may be attached to the electronic apparatus 10 so that for example the clip parts 60 extend on the display screen of the touch screen 12 along long sides of the display screen.

Further, in the present embodiment, the electronic apparatus set 1 has four input devices 20', but it may have any number of input devices 20' as long as having at least one. Therefore, the electronic apparatus set 1 may for example have two input devices 20'. In this case, two input devices 20' are for example attached to the electronic apparatus 10 in opposite directions to each other so that their clip parts 60 are positioned along one short side of the display screen of the touch screen 12.

### <Detection of Operation>

In the input device 20' according to the second embodiment configured in this way, when a user places a finger on the operating part 71, the electrostatic capacity detected by the sensor electrode of the touch panel 14 facing the apparatus-side electrode 80 corresponding to the operating part 71 will change. Specifically, for example, if a finger of a user approaches the first operating-side electrode 82-1 of the operating part 71, the potential of the first apparatus-side electrode 80-1 connected through the first wiring 83-1 to the first operating-side electrode 82-1 changes. If the potential of the first apparatus-side electrode 80-1 changes, at the region of the touch panel 14 corresponding to the first apparatus-side electrode 80-1, the electrostatic capacity between them changes. This change in electrostatic capacity is detected by the sensor electrode corresponding to that region. Therefore, in the present embodiment, operation of operating parts 71 by a user can be detected by the touch panel 14.

Note that, in the present embodiment, the electronic apparatus 10 may also be configured so as to perform calibration when it is placed on a placement surface after the input devices 20' is attached thereto. In this case, the processor 18 of the electronic apparatus 10 judges that the input device 20' is attached, for example, if a total sum of electrostatic capacities detected at regions of the touch panel 14 facing apparatus-side electrodes 80 of the clip parts 60 when the input device 20' are attached becomes greater than or equal to a predetermined threshold value. Further, the electronic apparatus 10 has an acceleration sensor or gyro sensor (not shown) connected to the processor 18, and the processor 18 judges whether the electronic apparatus 10 is being held in a horizontal state based on the output of the acceleration sensor or gyro sensor when judging that the input devices 20' have been attached. When judging that the electronic apparatus 10 is being held in a horizontal state, the processor 18 judges that the electronic apparatus 10 has been placed on a placement surface. At this time, the processor 18 performs calibration to make the electrostatic capacity detected by the sensor electrodes of the touch panel 14 the electrostatic capacity when no operation is being performed by the user. Due to attachment of the input devices 20', the electrostatic capacity detected by the sensor electrodes of the touch panel 14 will change somewhat, but by performing such calibration, even if there is such a change in the electrostatic capacity, it becomes possible to suitably detect operation of operating parts 71 by a user.

Above, preferred embodiments of the present invention were explained, but the present invention is not limited to these embodiments and can be corrected and changed in various ways within the language of the claims.

### REFERENCE SIGNS LIST

1 electronic apparatus set
10 electronic apparatus
12 touch screen
20, 20' input device
30 board
31 operating part
40 socket
43 electrode
60 clip part
70 plate-shaped part

## Claims

1. An input device able to be attached to an electronic apparatus having a touch screen provided with a display part and an electrostatic capacity type of touch panel arranged on the display part, having:
a plurality of operating parts able to be operated by a user; and
a plurality of electrodes arranged at different regions on the touch panel, wherein
each of the plurality of electrodes is connected to a corresponding operating part so that its potential changes in accordance with an operating state of the operating part corresponding to the electrode and is arranged on the touch panel so that in a state where the input device is attached to the electronic apparatus, a change in an electrostatic capacity occurring due to a change in the potential of the electrode between a corresponding region on the touch panel and the electrode is detected by the touch panel, and
the plurality of operating parts are arranged so as to surround at least three sides of the electronic apparatus when viewed in a direction perpendicular to a display screen of the touch screen in the state where the input device is attached to the electronic apparatus.

2. The input device according to claim 1, further having a fastening part for fastening the input device to the electronic apparatus in a detachable manner, wherein
the fastening part is arranged so that at least three of its sides are surrounded by the operating parts when viewed in the direction perpendicular to the display screen of the touch screen in the state where the input device is attached to the electronic apparatus.

3. The input device according to claim 2, wherein the plurality of electrodes are arranged at the fastening part.

4. The input device according to claim 2 or 3, further having a board on one surface of which the electronic apparatus is placed, wherein
the fastening part is attached to the board in a detachable manner.

5. The input device according to any one of claims 1 to 4, further having a nontransparent cover part for covering the display screen of the touch screen where the plurality of electrodes are arranged.

6. The input device according to any one of claims 1 to 5, wherein
the display screen of the touch screen is a rectangular shape having long sides and short sides, and
the plurality of electrodes are arranged on the touch panel aligned along the short sides of the display screen.

7. The input device according to any one of claims 1 to 6, wherein
the display screen of the touch screen is a square shape, and
the operating parts have:
a first set of operating parts arranged so as to straddle a first side of the display screen and a second side facing the first side when viewed in the direction perpendicular to the display screen of the touch screen in the state where the input device is attached to the electronic apparatus; and
a second set of operating parts arranged so as to straddle a third side of the display screen different from the first side and the second side and a fourth side facing the third side.

8. The input device according to any one of claims 1 to 7, wherein
the display screen of the touch screen is a rectangular shape having long sides and short sides,
when the display screen is used as a reference, the numbers of operating parts arranged at the outsides of the long sides are the same, and
when the display screen is used as the reference, the numbers of operating parts arranged at the outsides of the short sides are the same.

9. The input device according to any one of claims 1 to 8, further having a board on one surface of which the electronic apparatus is placed, wherein
the plurality of operating parts are provided on the surface of the board on which the electronic apparatus is placed.

10. The input device according to claim 9, wherein the board is foldable.

11. The input device according to claim 9 or 10, further having a board on one surface of which the electronic apparatus is placed, wherein
the board is provided with a metal sheet able to connect with the plurality of electrodes in accordance with operation of the user on the operating parts, and
the metal sheet is provided at a position superposed with the electronic apparatus when viewed in a direction perpendicular to the one surface in the state where the input device is attached to the electronic apparatus.

12. An electronic apparatus set having an electronic apparatus having a touch screen provided with a display part and an electrostatic capacity type of touch panel arranged on the display part, and an input device able to be attached to the electronic apparatus, wherein
the input device has a plurality of operating parts able to be operated by a user and a plurality of electrodes arranged at different regions on the touch panel,
each of the plurality of electrodes is connected to a corresponding operating part so that its potential changes in accordance with an operating state of the operating part corresponding to the electrode and is arranged on the touch panel so that in a state where the input device is attached to the electronic apparatus, a change in an electrostatic capacity occurring due to a change in the potential of the electrode between a corresponding region on the touch panel and the electrode is detected by the touch panel, and
the plurality of operating parts are arranged so as to surround at least three sides of the electronic apparatus when viewed in a direction perpendicular to a display screen of the touch screen in the state where the input device is attached to the electronic apparatus.

13. The electronic apparatus set according to claim 12, further having an operating device able to communicate with the electronic apparatus at least wirelessly, wherein
the operating device is able to communicate with the electronic apparatus wirelessly even when the input device is attached to the electronic apparatus.

14. The electronic apparatus set according to claim 13, wherein
the operating device is formed so as to be able to be attached to the electronic apparatus,
and
the input device is attached to an attachment position of the operating device when the operating device is detached from the electronic apparatus.

15. The electronic apparatus set according to claim 13 or 14, wherein when the operating device is detached from the electronic apparatus and the input device is attached to the electronic apparatus, the operating parts and the operating device can input operations to the electronic apparatus in parallel or simultaneously for running processing in the same application program.
